# EUROPEAN PATENT SPECIFICATION

(11) **EP 2 626 605 B1**
(45) Date of publication and mention of the grant of the patent: **30.09.2015**
(21) Application number: 13000628.1
(22) Date of filing: 07.02.2013
(51) Int. Cl.: F16K 5/06, F16K 27/06

(54) **Valve with a by-pass channel**
Ventil mit einem Bypasskanal
Vanne comportant un canal de déviation

(30) Priority: 09.02.2012 IT MI20120183
(43) Date of publication of application: 14.08.2013
(73) Proprietor: Greiner S.p.A., 25065 Lumezzane (BS) (IT)
(72) Inventor: Lena, Roberto, 25065 Lumezzane (BS) (IT); Astori, Giorgio, 25065 Lumezzane (BS) (IT)
(74) Representative: Marietti, Andrea

(56) References cited:
- GB-A- 2 180 918
- GB-A- 2 233 739
- US-A- 4 928 731

## Description

The present invention concerns a valve, preferably a ball valve, for the interception of a fluid flow in a piping. In particular, the present inventions concerns an on/off valve shaped to guarantee the passage of a fluid amount therethrough also if the valve is in a closed position.

It is useful to immediately notice that the valve according to the present invention can be used with any fluid type, both liquids and gases, also if it is particularly recommended for the use in piping for conveying and distributing water.

On/off valves provided with a shutter (i.e. a plug), for example of the ball type, having a duct passing therethrough, which is movable inside a recess or housing of the valve body to intercept or allow the fluid passage therethrough, are at the present time available on the market.

In fact, the shutter is provided with a through duct, usually straight, having an inlet opening and an outlet opening, and which is rotated by convenient activating means between a closed position and an open position of the valve, and vice versa. In the closed position of the valve the passage through the shutter duct is not allowed, whereas in the open position of the valve the shutter, by the through duct passing through it, fluidically joins the inlet opening with the outlet opening of the valve to which piping or similar means for conveying fluids, that are positioned upstream and downstream of the valve, are respectively connected.

When the valve is closed, the through duct of the shutter is positioned so as to exhibit its own axis in a direction substantially perpendicular to the axis defined by the inlet and outlet openings of the valve, in order to prevent the fluid from flowing therethrough. The valve can be blocked in a closed position, that is in a fluid stop position, for example to carry out maintenance services downstream of the valve, or else to stop the fluid supply to the user/s served by the piping placed downstream of the on/off valve.

In fact, in the water supplying fixtures, and in particular of drinking water for domestic or industrial use, in case wherein the user did not pay out what due in relation to the provided service, the distribution provider has the authorization to stop the water flow supplied to the user by closing the on/off valve placed upstream of the fixture of the user in arrears.

The requirements the World Health Organization recommended in case of interruption of water supply to an user in arrears is that a minimum amount of fluid necessary to satisfy at least his/ her elemental needs is anyway guaranteed.

For this reason on/off valves have been developed and placed on the market allowing the passage of a minimum flow amount also when the valve is in the closed position and then the fluid passage through the valve is blocked by the shutter. It has to be noticed that hereinafter with the terms "minimum fluid amount" or "minimum guaranteed flow" is meant the fluid amount the valve allows (guarantees) to pass from downstream to upstream of the valve itself also when it is in the closed position, and the fluid passage through the shutter is impeded.

The Italian Application BS2005A000161 describes a valve wherein the shutter is movable between a completely open position of the valve and a limitedly open position in which the passage of a minimum fluid amount is guaranteed through the grooves present on a piston for controlling the fluid flow that is installed in the ball shutter of the valve.

It has to be noticed that the presence of a piston controlling the flow placed inside the ball shutter causes great drawbacks as it leads to considerable load losses when the ball shutter is placed in the completely open position of the valve. In fact, in such a position, the load loss caused by the piston installed inside the ball shutter does not allow to have the maximum fluid flow through the valve.

In addition, in valves of known type, such as for example that described in the Italian Application BS2005A000161, also if allowing the passage of a minimum fluid amount when the valve is in the closed position, do not give the possibility of controlling the fluid flow rate passing through the valve when the latter is closed. In other words, it is not possible to adjust the minimum fluid amount (minimum guaranteed flow) except after an onerous valve replacement.

Application US 4 928 731 discloses another valve relevant to the present application. Object of the present invention is to provide an on/off valve for a fluid flow able to guarantee the passage of a fluid amount (minimum guaranteed flow), also when the valve is in the closed position, which does not suffer from problems of valves known in the art briefly discussed above, such as for example those related to load losses when the valve is open.

Further object of the present invention is to provide an on/off valve that is simple and cheap to implement and allows as well to adjust the fluid amount passing through the valve when the latter is in the closed position.

In addition, a further object of the present invention is to provide a method for guaranteeing the passage of a fluid amount (minimum guaranteed flow) from an inlet duct to an outlet duct, through a valve according to the present invention, which can be arranged between at least one open position and at least one closed position in which the shutter prevents the fluid from passing therethrough in the outlet duct of the valve. These and other objects are obtained by an on/off valve for a fluid flow, according to the present invention, comprising a main valve body provided with at least one inlet duct and at least one outlet duct, at least one shutter provided with at least one through duct in its inside, and rotatably accommodated in a recess of the valve body for its rotation between at least one open position of the valve and at least one closed position of the valve.

In addition, the valve according to the present invention comprises at least one bypass duct for the direct, or indirect, fluidic connection of the inlet duct with the outlet duct of the valve, at least when the shutter is in at least one closed position of the valve.

It has to be immediately noticed that hereinafter with the term "at least one closed position of the valve" is meant at least one position in which the valve shutter can be arranged in order to prevent the fluid from passing through it into the outlet duct. Advantageously the presence of a bypass duct connecting the inlet and outlet ducts of the valve, allows to guarantee the passage of a minimum amount of fluid downstream of the valve, without substantially generating load losses, also when the valve is closed. In fact, the valve according to the present invention has not means for controlling the flow which are placed inside the shutter, as on the contrary happens in the valve of the known type, let think for example about the piston provided with groove accommodated inside the shutter of the valve described in the Application BS2005A000161. The absence of these elements does not generate load losses inside the valve shutter which, consequently, when the valve is positioned in a completely open position, causes the passage of the maximum fluid flow.

As it will be better shown in the following, the valve according to the present invention can be arranged in at least one "completely closed" position in which the fluid passage inside the valve from the inlet duct to the outlet duct is not allowed, nor through the bypass duct.

Particularly, in such a completely closed position the shutter prevents the fluid from passing downstream of the inlet duct, and in particular it prevents the fluid from passing from the inlet duct inside the recess in which the shutter itself is accommodated, and consequently it prevents the passage thereof into the bypass duct too, the bypass duct being able to be opened in the afore said recess by connecting the latter to the outlet duct, and in the outlet duct.

In addition, as mentioned, the valve according to the present invention can be arranged in at least one closed position in which the passage of a minimum fluid amount is guaranteed through the bypass duct, even if the fluid is prevented from passing through the shutter into the outlet duct.

According to a second aspect of the present invention, the bypass duct is realized at least partially inside the valve body, meaning that the dimensions of the valve are not increased due to the presence of the bypass duct.

As mentioned, the bypass duct can connect directly or indirectly the inlet and outlet ducts, bypassing de facto the shutter of which it is provided with. In fact, according to a possible embodiment, the bypass duct fluidically connects the outlet duct of the valve with the recess in which the shutter is accommodated, which in its turn fluidically communicates with the inlet duct of the valve.

In fact, according to a possible embodiment, in the closed position of the valve, the shutter prevents the fluid from passing into the outlet duct and its through duct fluidically connects the inlet duct of the valve with the recess in which the shutter is accommodated. In this case the bypass duct fluidically connects the outlet duct with the recess in which the shutter is accommodated, the latter, as mentioned, being in fluidic connection with the inlet duct of the valve when the valve is in the closed position. By doing so, the bypass duct indirectly fluidically connects the inlet duct of the valve with the outlet duct thereof.

According to an aspect of the present invention, the shutter comprises at least two openings defining the through duct in its inside and, according to a preferred embodiment, the shutter is provided with three openings defining a substantially T-shaped through duct in its inside. According to the latter embodiment, in the closed position of the valve, the shutter prevents the fluid from passing into the outlet duct and at the same time, by means of the T-shaped through duct, it fluidically connects the inlet duct of the valve with the recess in which the shutter is accommodated. As mentioned, the bypass duct causes the fluidic connection of the recess in which the shutter is accommodated with the outlet duct, by indirectly fluidically connecting the inlet duct of the valve with its outlet duct.

The valve according to the present invention can be used in piping for distributing water and advantageously, in case it is closed in order to stop the supply to a user in arrears, it allows supplying a minimum flow amount through the bypass duct, necessary to satisfy the elemental needs.

Advantageously the valve according to the present invention further allows to adjust the fluid amount that is supplied through the bypass duct when the valve is closed. Regarding this, the valve comprises means for cutting-off and/or adjusting the flow inside the bypass duct which preferably acts by decreasing, or completely shutting, the passage section of the bypass duct.

The present invention concerns as well a method for guaranteeing the passage of a minimum amount of fluid flow by an on/off valve of the above described type, comprising the step of displacing the valve shutter from the at least one open position in which the fluid passage from the inlet duct to the outlet duct is allowed, to at least one closed position of the valve in which the passage of a minimum amount of fluid flow from the inlet duct to the outlet duct is guaranteed by means of the at least one bypass duct.

In the open position of the valve, the through duct of the shutter, fluidically joins the inlet duct with the outlet duct of the valve. On the contrary, in the closed position of the valve in which the passage of a minimum fluid flow by means of the bypass duct is guaranteed, the shutter is arranged so as to prevent the passage through it into the outlet duct, even if allowing the passage of a minimum fluid amount through the bypass duct.

As mentioned, the bypass duct is adapted to the direct, or indirect, fluidic connection of the inlet duct with the outlet duct of the valve, and according to an embodiment it allows the fluidic connection of the recess, in which the shutter is accommodated, with the outlet duct.

Furthermore, the method according to the present invention can comprise the step of arranging the shutter and then the valve in an additional closed position, and in particular in a completely closed position, in which the shutter prevents the fluid from passing into the valve outlet duct, nor through the bypass duct.

According to an aspect of the method according to the present invention, the step of arranging the shutter in an additional closed position, and in particular in a completely closed position, in which the shutter prevents the fluid from passing into the valve outlet duct and through the bypass duct too is carried out before the step of displacing the shutter to the closed position of the valve in which the passage of a minimum amount of fluid from the inlet duct to the outlet duct by means of the bypass duct is guaranteed. Advantageously, the method according to the present invention comprises the additional step of adjusting the minimum amount of fluid passing from the inlet duct to the outlet duct, through the bypass duct. In fact, by acting on the means for cutting-off and/or adjusting the fluid flow inside the bypass duct which preferably operate by reducing, or completely shutting, the passage section of the bypass duct, it is possible to adjust the fluid amount supplied through the bypass duct when the valve is closed.

These and other advantages will be evident from the following description and the figures attached, herein reported for illustrative and not limitative purposes, wherein:
- figure 1 shows a side view of a first embodiment of the valve according to the present invention;
- figures 2A and 2B are two sectional views according to plane A of figure 1 which show the valve in a open and closed position of the valve, respectively;
- figure 3 is a side sectional view of the valve of figure 1 in a closed position;
- figure 4 is a enlarged view of the detail A of figure 3 in which the means for adjusting the flow inside the bypass duct are visible;
- figure 5 shows a side view of a second embodiment of the valve according to the present invention;
- figure 5A is a side sectional view of the valve of figure 5 in a closed position;
- figures 6A and 6B are two sectional views according to plane B of figure 5 which show the valve in a open and closed position of the valve, respectively;
- figure 7 is an additional side view of the second embodiment of the valve of figure 5;
- figure 8 is a sectional view according to plane C of figure 7.

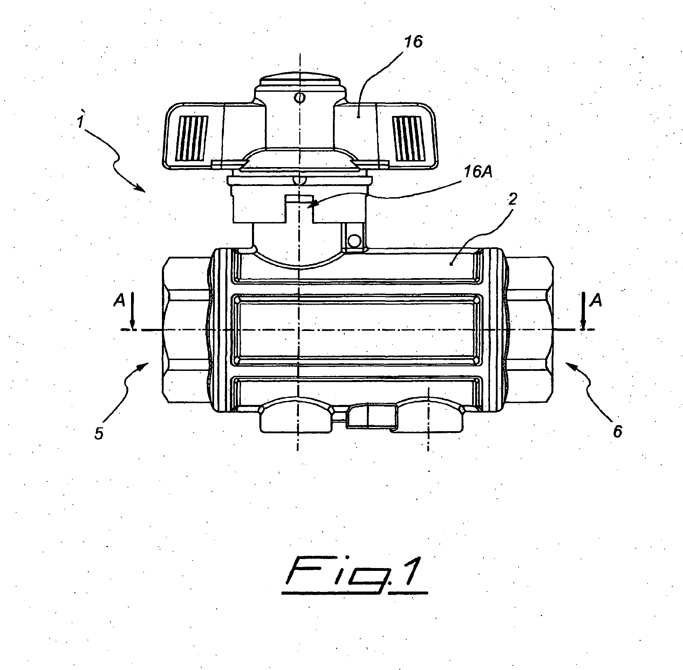

Referring to figures 1- 4 and 5 - 8 respectively, two possible embodiments of the valve 1 according the present invention will be described. Components similar in the two embodiments will be referred in text and figures with the same numerals.

The on/off valve 1 for a fluid flow, according to the present invention, comprises a main valve body 2 provided with at least one inlet duct 5 and at least one outlet duct 6, at least one shutter 3 provided with at least one through duct 7 in its inside and rotatably accommodated in a recess 4 of the valve body 2 for its rotation between at least one open position of the valve and at least one closed position of the valve.

Preferably the inlet and outlet ducts 5 and 6 comprise at least one threaded portion allowing the constraint thereof to piping, fitting, collars or similar means for conveying fluids.

As afore said, the valve according to the present invention can be used with any fluid type, both liquids and gases, and according to a preferred used implementation it is used to intercept water, in the distribution systems for domestic or industrial use.

The shutter 3, that is preferably of the ball type, is rotatable inside the recess 4 by being constrained to activating means, such as for example a stem 15 connecting it to an activating handle 16.

The activating handle 16 is designed in order to be able to move in a range of positions comprised between said open position and the closed position, as it will be described in detail in the following. It has to be noticed immediately that the valve according to the present invention can be arranged in at least one "completely closed" position in which the fluid passage inside the valve from the inlet duct 5 to the outlet duct 6 is not allowed.

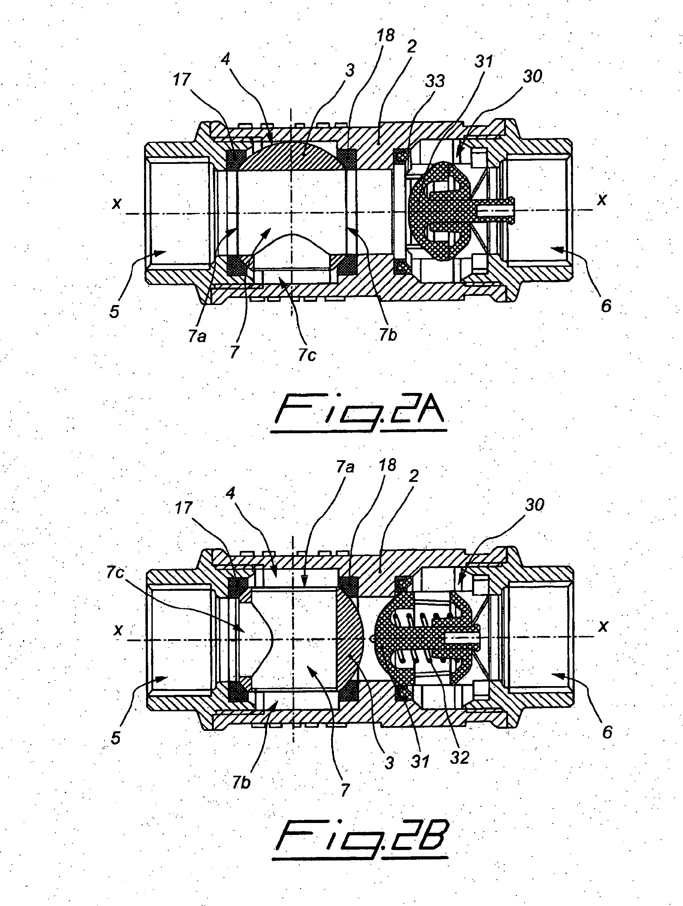

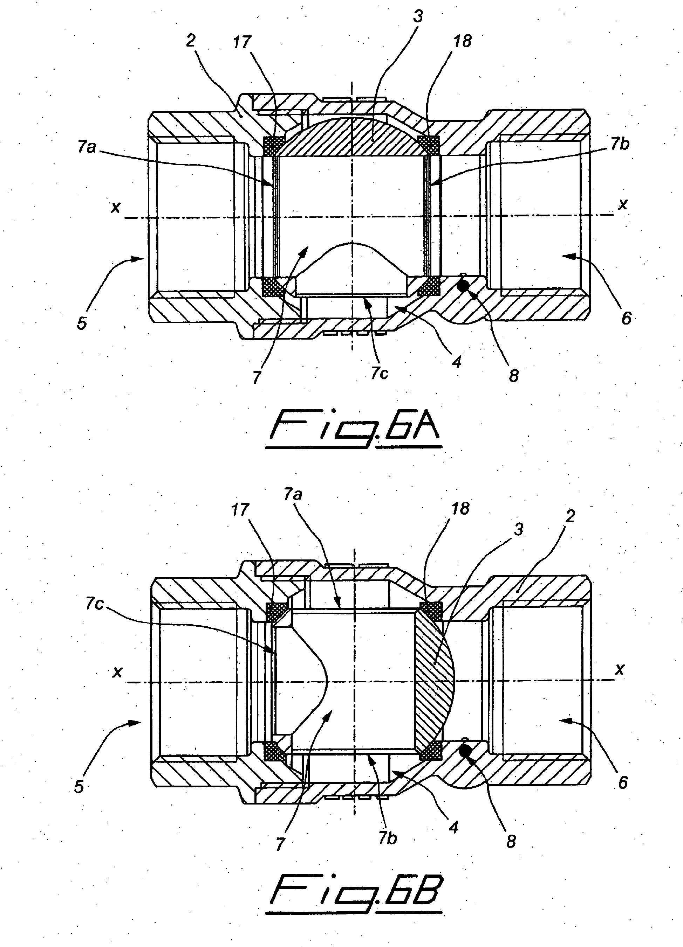

In particular, in such a "completely closed" position the shutter 3 prevents the fluid from passing downstream of the inlet duct 5, and in particular it prevents the fluid from passing from the inlet duct 5 to the inside of the recess 4 in which it is accommodated. Such a completely closed position is not shown in the figures in attachment, nevertheless the shape of the shutter allows to prevent the fluid from passing downstream of the inlet duct 5, for example by rotating anticlockwise the shutter 3 of 90° starting from the position shown in figures 2A and 6A.

In addition, as illustrated in the attached figures and as it will be described more in detail in the following, the valve according to the present invention can be arranged in at least one closed position in which the passage of a minimum fluid amount is guaranteed through a bypass duct 8, even if the fluid is prevented from passing through the shutter 3 into the outlet duct 6.

The ends of the rotation run of the handle 16 can be determined by possible limit elements 19. Furthermore the handle 16, and then the shutter 3 connected thereto, can be blocked, for example in a closed position of the valve, so that to prevent the undesired rotation thereof. In fact, the handle 16 is provided with notches 16a adapted to cooperate with limit stops 19 and to block the handle in a determined position. According to a possible embodiment, the fastening of the handle 16 to the stem 15 is carried out by means of a screw of the tamper-proof type, provided with a special head that can be screwed/ unscrewed only by the appropriate key.

As shown in the attached figures, inside the recess 4 there are gaskets, usually composed of two rings 17 and 18 which allow the rotation of the shutter 3 and delimit the recess 4, thus preventing the fluid from passing outside thereof at the ducts 5 and 6.

It has to be noticed that the substantially spherical shutter 3 can be replaced by any other shutter known in the art tha is able to carry out the same function.

In addition, the valve according to the present invention comprises at least one bypass duct 8 for the direct, or indirect, fluidic connection of the inlet duct 5 with the outlet duct 6 of the valve, at least when the shutter 3 is in at least one closed position of the valve. That is in a position in which the shutter 3 prevents the fluid from passing through the outlet duct 6.

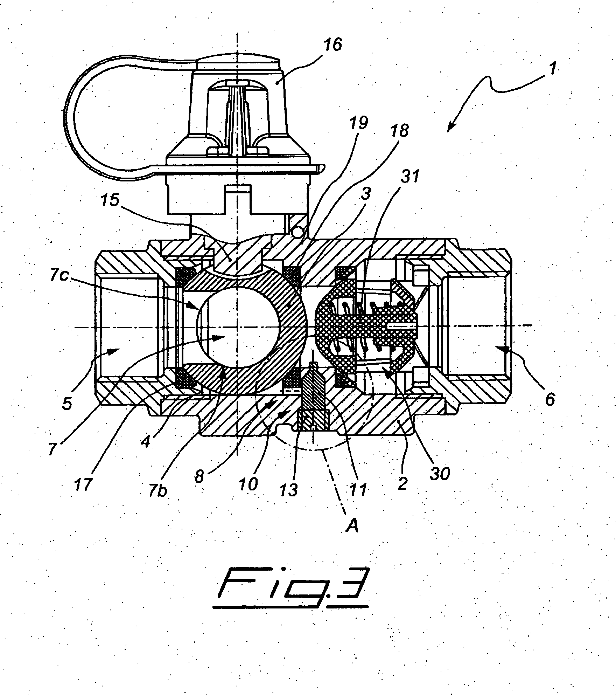

Preferably, the bypass duct 8 is realized at least in part inside the body 2 of the valve so that to not cause a high increase of dimensions and bulk of the valve - about this, see figures 3, 4 and 8 in which the bypass duct 8 is visible. According to a preferred embodiment, and as visible in the attached figures, the bypass duct 8 is completely realized inside the body 2 of the valve.

As it will be better seen in the following, the presence of a bypass duct 8 allows to guarantee a fluid amount passing from the inlet duct 5 to the outlet duct 6 even when the valve is in the closed position and the shutter 3 in its inside prevents the fluid from passing.

According to possible embodiments the bypass duct 8 can connect directly or indirectly the inlet and outlet ducts 5 and 6 of the valve. In other words, the valve can be provided with a bypass duct 8 connecting directly the two inlet and outlet ducts 5 and 6, even if it has to be noticed that such an embodiment is not shown in the attached figures. Alternatively, as illustrated in the attached figures, the bypass duct 8 connects indirectly the two inlet and outlet ducts 5 and 6 and in particular it connects the recess 4 inside which the shutter 3 is accommodated, with the outlet duct 6. Indeed in this case, as it will be clearer in the following, in the closed position of the valve there is anyway, thanks to the particular shape of the shutter, a fluidic connection between the inlet duct 5 and the recess 4.

Turning back to the shutter movement inside the valve, it has to be noticed that the rotation of the handle 16 allows the shutter 3 to be arranged in a open position of the valve (illustrated in figures 2A and 6A) and at least in a closed position of the valve (illustrated in figures 2B, 3, 5A, 6B and 7).

In the open position of the valve, the flow of the fluid supplied to the valve through the duct 5 passes through the through duct 7 into the shutter 3 until it reaches the outlet duct 6 of the valve; in other words, the through duct 7 fluidically joins the inlet duct 5 with the outlet duct 6 in the open position of the valve.

On the contrary, in the closed position of the valve, the fluid flow coming out from the outlet duct 6 is prevented by means of the shutter 3.

In other words, in the closed position illustrated in figures 2B, 3, 5A, 6B and 7, the shutter 3 prevents the fluid from passing in the outlet duct 6, but the bypass duct 8 guarantees the passage of a minimum fluid amount from the inlet duct 5 towards the outlet duct 6.

As afore mentioned, although not been illustrated in the attached figures, by the rotation of the shutter 3 it is possible as well to arrange the valve in at least one "completely closed" position in which the fluid passage inside the valve from the inlet duct 5 to the outlet duct 6 is not allowed.

In particular, in such a "completely closed" position the shutter 3 prevents the fluid from passing downstream of the inlet duct 5, and in particular it prevents the fluid from passing from the inlet duct 5 to the inside of the recess 4 in which the shutter itself is accommodated. By doing so, also the passage of a minimum fluid amount through the bypass duct 8 is prevented. In other words, the shape of the shutter 3 allows to arrange one surface thereof at the inlet duct 5 of the valve in order to prevent the fluid from passing downstream of it. As can be easily understood from the attached figures, such a completely closed position can be reached for example by rotating anticlockwise the shutter 3 from the open position illustrated in figures 2A and 6A of 90°. The shutter is provided with at least two openings 7a and 7b defining the through duct 7.

According to a possible embodiment, the shutter 3 is provided with only two openings 7a and 7b defining a cylindrical through duct 7, traditionally used in the on/off valves known in the art. In the open position of the valve the openings 7a and 7b are aligned with the inlet and outlet ducts 5 and 6 so that the fluid passes through the valve. In the closed position the through duct 7, defined by the openings 7a and 7b, is arranged perpendicularly to the axis defined by the inlet and outlet ducts 5 and 6 so that such a fluid passage through the valve is not allowed.

According to this possible embodiment, the presence of a bypass duct 8 connecting directly the inlet duct 5 to the outlet duct 6 guarantees the passage of a fluid amount also when the valve is in the closed position.

In the embodiment shown in the figures the shutter 3 is provided with three openings 7a, 7b and 7c defining a substantially T-shaped through duct 7. The openings 7a and 7b, that are arranged one in front of the other, allow the fluid to pass from the inlet duct 5 to the outlet duct 6 when the valve is opened (see figures 2A and 6A). On the contrary, when the shutter 3 is arranged in the closed position of the valve, the opening 7c is placed in alignment with the inlet duct 5, whereas the two openings 7a and 7b will be arranged perpendicularly to the axis X defined by the inlet and outlet ducts 5 and 6. It follows that in the closed position of the valve, the fluid passing through the duct 5 will pass through the opening 7c of the through duct 7 of the shutter 3 and will reach the recess 4 of the valve body by means of the openings 7a and 7b of the duct 7 itself (see figures 2B, 3, 5A, 6B).

In other words, in the closed position of the valve the shutter 3 prevents the fluid passage in the outlet duct 6 and at the same time the through duct 7 of the shutter 3 connects fluidically the inlet duct 5 with the recess 4 in which the shutter 3 is accommodated.

As can be seen in the figures, preferably the bypass duct 8 connecting the recess 4 to the outlet duct 6 is realized so that to pass outside the gaskets 17 and 18 of the recess so that the fluid reaching the recess 4, through the through duct 7 of the shutter 3, has the bypass duct 8 as the only way to come out.

It has to be noticed that the completely closed position in which the fluid is prevented from passing downstream of the inlet duct 5 and then a minimum fluid flow is prevented from passing through the bypass duct 8, can be obtained for example by rotating anticlockwise the shutter 3 from the open position illustrated in figures 2A and 6A of 90°, because of the shape of the shutter 3.

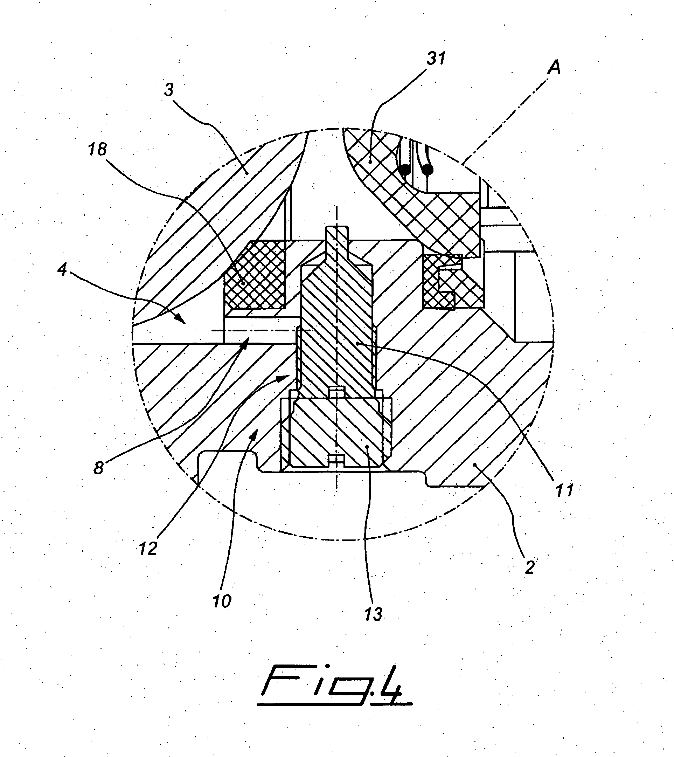

In figures 1 - 4 relating to the first embodiment, the bypass duct 8 is realized in the lower portion of the main body 2 of the valve and as can be seen in the sectional views of figures 3 and 4, the bypass duct 8 passes under the gasket 18 and then leads inside the outlet duct 6 of the valve.

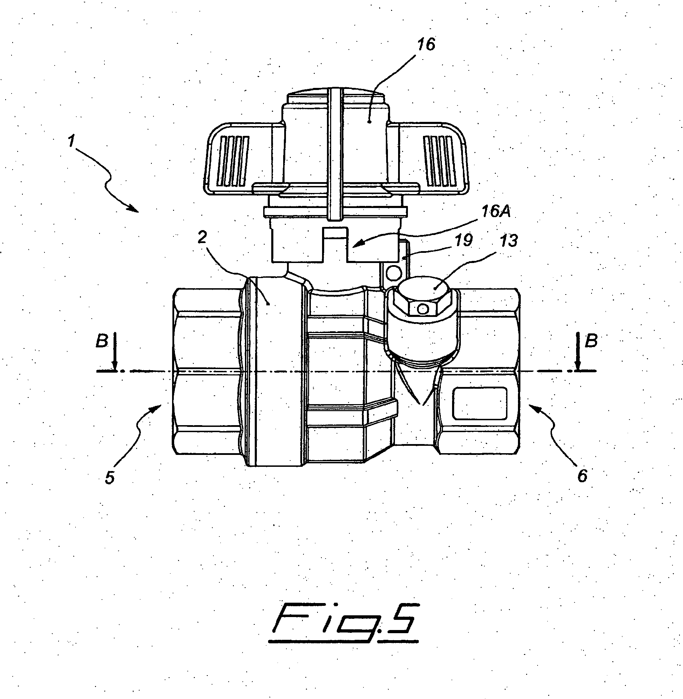

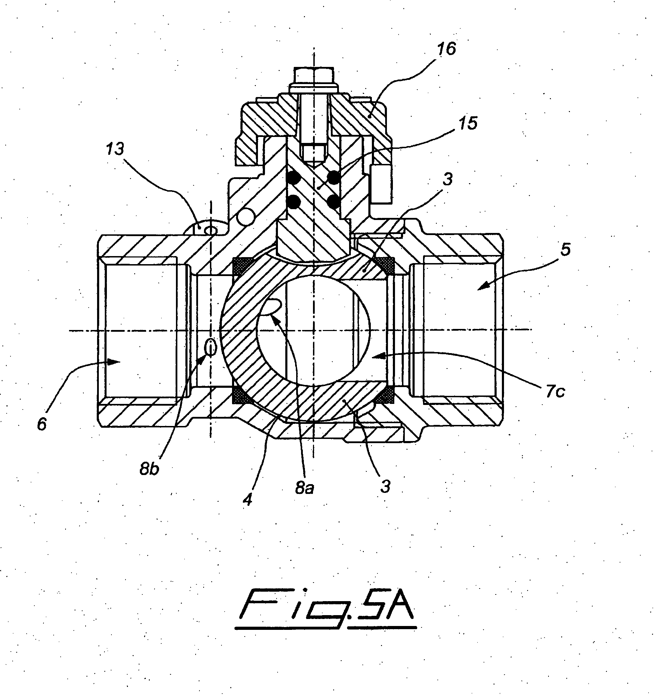

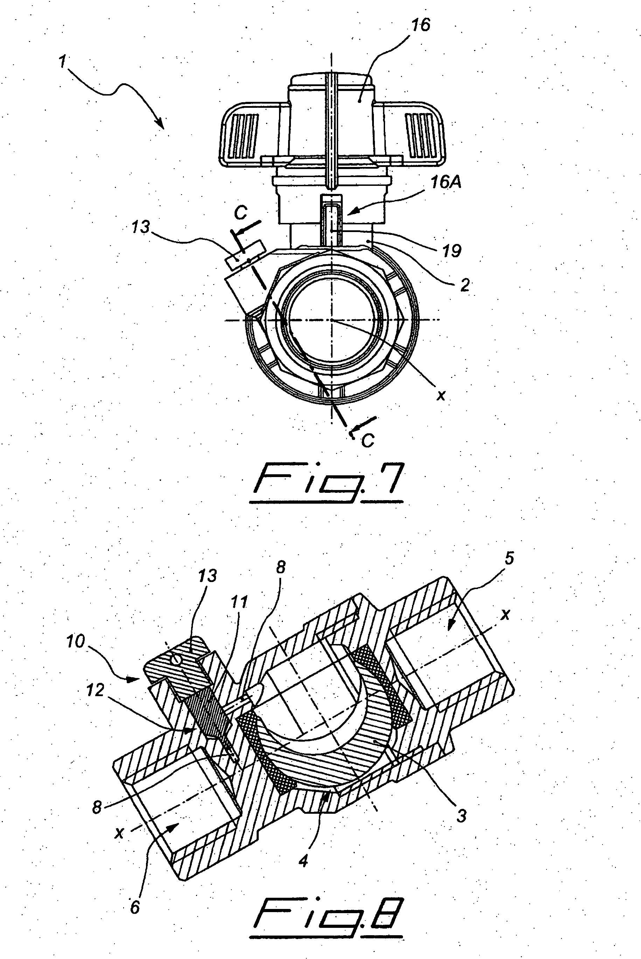

On the contrary, in figures 5A and 8, relating to the second possible embodiment, the bypass duct 8 is realized in a side area of the main body 2 of the valve so that to pass sideways and anyway outside the gasket 18. In the sectional view of figure 5A the inlet and outlet holes 8a and 8b of the bypass duct 8 inside the recess 4 can be seen. According to a possible embodiment, the valve according to the present invention comprises means 10 for cutting off and/or adjusting the flow inside the bypass duct 8. Preferably such means 10 acts by decreasing, or completely shutting, the passage section of the bypass duct 8. The presence of such means allows to obtain an adjustment of the fluid amount passing through the bypass duct 8 and then flowing through the outlet duct 6 and the piping upstream of the valve, when the latter is closed.

In the embodiments shown in figures 3, 4 and 8, the means 10 for cutting-off/adjusting the flow comprise at least one grub screw 11 adapted for blocking at least partially the passage section of the bypass duct 8. As can be seen in figures, the grub screw 11 is installed in at least one seat 12 accessible from the outside.

Preferably the seat 12 has at least one inner threaded portion adapted to cooperate with a corresponding threaded portion arranged on the outer surface of the grub screw 11 so that it could be inserted in a controlled way inside the seat 12 and then it could cause the blockage of the passage section of the bypass duct 8.

It has to be noticed that the seat 12, and then the point wherein the grub screw 11 acts to cause the complete or partial blockage of the passage section of the bypass duct 8, can be arranged anywhere along the bypass duct 8 itself.

In the first embodiment illustrated in figures 1 - 4, the seat 12 is realized in the lower portion of the body 2 of the valve and it has an axis substantially perpendicular to the axis X defined by the inlet and outlet ducts 5 and 6.

On the contrary, in the second embodiment, illustrated in figures 5 - 8, the seat 12 is arranged on the side wall of the body 2 of the valve and has an inclined axis.

According to an aspect of the present invention, the access to the seat 12, and then to the grub screw 11 installed in its inside, is prevented by a safety cap 13 that is removed when the changing of the fluid amount passing through the bypass duct 8 is desired by acting on the threaded grub screw 11.

The valve according to the present invention further comprises means 30 for intercepting selectively the fluid flow in the valve, said means allowing the fluid to pass in a direction inside the valve and preventing it from passing in the opposite direction. The means for intercepting selectively the fluid flow are disposed downstream of the shutter at the outlet duct.

These intercepting means 30, known in the art as "backflow" means of the fluid flow, are illustrated, in the possible embodiment of figures 1 - 4, arranged downstream of the shutter 3 at the outlet duct 6.

In the shown embodiment the intercepting means 30 allow the fluid passage from the inlet duct 5 towards the outlet duct 6, preventing the fluid backflow from the outlet duct 6 towards the inlet duct 5. Such means 30 comprise for example a piston 31 movable under the action of the fluid that, in detail, is displaced by overcoming the force of a countering spring 32 to cause the fluid passage in the duct 6 coming out from the valve (figure 2A). The fluid flow contrariwise, that is from the outlet duct 6 towards the inlet duct 5, is prevented by means of a piston 31 that stays in the closed position in the passage 33 thanks to a spring 32 and to the fluid pressure (such a closed position is illustrated in figures 2B and 3).

The present invention concerns as well a method for guaranteeing the passage of a minimum amount of a fluid flow by an on/off valve of the above described type.

The method comprises the step of displacing the shutter 3 of the valve from the at least one open position in which the fluid passage from the inlet duct 5 to the outlet duct 6 is allowed, in at least one closed position of the valve, in which the passage of a minimum amount of fluid flow from the inlet duct 5 to the outlet duct 6 is guaranteed by means of said at least one bypass duct 8,

In the open position of the valve, illustrated in figures 2A and 6A, the through duct 7 of the shutter 3 fluidically communicates the inlet duct 5 with the outlet duct 6 of the valve. On the contrary, in the closed position of the valve, illustrated in figures 2B, 3, 5A, 6B and 7, in which the passage of a minimum fluid flow is guaranteed by the bypass duct 8, the shutter is arranged so as to prevent the passage in the outlet duct 6.

As mentioned, the bypass duct 8 is adapted to the direct, or indirect, fluidic connection of the inlet duct 5 with the outlet duct 6 of the valve, and according to an embodiment of the present invention it allows the fluidic connection of the recess 4, in which the shutter 3 is accommodated, with the outlet duct 6.

Furthermore, the method according to the present invention can comprise the step of arranging the shutter 3, and then the valve, in an additional closed position, and in particular in a completely closed position, in which the shutter 3 prevents the fluid from passing into the valve outlet duct 6, and nor through the bypass duct 8.

As mentioned, such a "completely closed" position is not illustrated in figures, and e.g. it can be obtained by rotating anticlockwise the shutter 3 of 90° starting from the open position of the valve illustrated in the figures 2A and 6A. In fact, by doing so, the shape of the shutter 3 allows to arrange one surface thereof at the inlet duct 5 preventing the fluid from passing downstream of the inlet duct, and then inside the valve.

According to a particular aspect of the method according to the present invention, the closed position in which the passage of a minimum fluid amount through the bypass duct 8 is guaranteed, but the shutter 3 prevents the fluid from passing inside the outlet duct 6 (see figures 2B, 3, 5A, 6B and 7), is reached, starting from the completely closed position in which the shutter prevents the fluid from passing downstream of the inlet duct 5, by disassembling the activating handle 16, as mentioned, for example by a tamper-proof key, and rotating the shutter 3 of 180°.

So the position the shutter 3 reached will be the position illustrated in figures 2B, 3, 5A, 6B and 7, in which the passage of a minimum fluid amount is guaranteed by the bypass duct 8.

The method provides then the step of reassembling the activating handle 16, for example by means of a tamper-proof key.

As mentioned, the activating handle 16, and then the shutter 3 connected thereto, can be blocked in the closed position of the valve so that to prevent the undesired rotation thereof. In fact, the handle 16 is provided with notches 16a adapted to cooperate with limit stops 19 and to block the handle in the position in which the passage of a minimum fluid amount through the bypass duct 8 is guaranteed.

In addition, once the shutter 3 has been arranged in the closed position that allows the passage of a minimum fluid amount and the activating handle 16 has been reassembled in such position, seals can be applied, for example convenient sealing wires. Advantageously, the method according to the present invention comprises the additional step of adjusting the minimum amount of fluid passing from the inlet duct 5 to the outlet duct 6, through the bypass duct 8. In fact, by acting on the afore described means 10 for cutting-off and/or adjusting the fluid flow inside the bypass duct 8 which preferably operate by reducing, or completely shutting, the passage section of the bypass duct, it is possible to adjust the fluid amount supplied through the bypass duct when the valve is closed.

## Claims

1. On/off valve (1) for a fluid flow, of the type comprising a main valve body (2) provided with at least one inlet duct (5) and at least one outlet duct (6), at least one shutter (3) operated by an activating handle (16), provided with at least one through duct (7) and rotatably accommodated in at least one recess (4) of said valve body (2) for its rotation between at least one open position of the valve and at least one closed position of the valve, said through duct (7) connecting fluidically said inlet duct (5) with said outlet duct (6) in said open position of the valve, said valve further comprising at least one bypass duct (8) for the direct, or indirect, fluidic connection of said inlet duct (5) with said outlet duct (6) of said valve at least when said shutter (3) is in said at least one closed position of the valve, **characterized in that** said shutter (3) is rotatable in a completely closed position of the valve wherein the fluid passage from the inlet duct (5) to the outlet duct (6), and through the bypass duct (8), is not allowed and **in that** said shutter (3) can be brought in said closed position of said valve in which the passage of a minimum amount of fluid flow from said inlet duct (5) to said outlet duct (6) is guaranteed by means of said at least one bypass duct (8) by disassembling the activating handle (16) and rotating the shutter (3).

2. Valve according to claim 1, wherein said at least one bypass duct (8) is made at least partially in said main valve body (2).

3. Valve according to claim 1 or 2 wherein said at least one shutter (3) comprises at least two openings (7a, 7b) defining said through duct (7).

4. Valve according to any one of the preceding claims, **characterized in that** in said at least one closed position of said valve said shutter (3) prevents the fluid passage in said outlet duct (6) and said through duct (7) of said shutter (3) connects fluidically said inlet duct (5) with said recess (4) in which the shutter (3) is accommodated.

5. Valve according to claim 4, wherein said shutter (3) comprises three openings (7a, 7b, 7c), said through duct (7) being substantially T-shaped.

6. Valve according to claim 4 or 5, **characterized in that** said bypass duct (8) connects fluidically said outlet duct (6) with said recess (4), said at least one recess (4) in said closed position of said valve being fluidically connected with said inlet duct (5).

7. Valve according to any one of the preceding claims, **characterized by** comprising means (10) for cutting-off and/or adjusting the flow inside said bypass duct (8).

8. Valve according to claim 7, wherein said means (10) for cutting-off and/or adjusting the flow comprise at least one grub screw (11) adapted for blocking at least in part the passage section of said bypass duct (8).

9. Valve according to claim 8, wherein said at least one grub screw (11) is fitted in at least one seat (12) accessible from the outside for adjusting the at least partial blockage of the passage section of said bypass duct (8).

10. Valve according to the claim 9, wherein the access to said seat (12) is prevented by a safety plug (13).

11. Valve according to any one of the preceding claims **characterized by** comprising further means (30) for intercepting selectively the fluid flow in said valve, said means allowing said fluid to pass in a direction inside said valve and preventing it from passing in the opposite direction.

12. Valve according to claim 11, wherein said means (30) for intercepting selectively the fluid flow allow the fluid passage from the inlet duct (5) towards the outlet duct (6), preventing the fluid backflow from the outlet duct (6) towards the inlet duct (5).

13. Valve according to claims 11 or 12, wherein said means (30) for intercepting selectively the fluid flow comprise a piston (31) moving under the fluid action.

14. Method for guaranteeing the passage of a minimum amount of fluid flow by an on/off valve (1), according to any one of the preceding claims, comprising a main valve body (2) provided with at least one inlet duct (5) and at least one outlet duct (6), at least one shutter (3) operated by an activating handle (16), provided with at least one through duct (7) and rotatably accommodated in at least one recess (4) of said valve body (2) for its rotation between at least one open position of the valve and at least one closed position of the valve, said shutter (3) being rotatable in a completely closed position of the valve wherein the fluid passage from the inlet duct (5) to the outlet duct (6), and through the bypass duct (8), is not allowed, the method comprising the step of displacing said shutter (3) from said at least one open position of said valve in which the fluid passage from said inlet duct (5) to said outlet duct (6) is allowed and said through duct (7) connects fluidically said inlet duct (5) with said outlet duct (6), or from said completely closed position of the valve wherein the fluid passage from the inlet duct (5) to the outlet duct (6), and through the bypass duct (8), is not allowed, to said at least one closed position of said valve in which the passage of a minimum amount of fluid flow from said inlet duct (5) to said outlet duct (6) is guaranteed by means of said at least one bypass duct (8) adapted for the direct, or indirect, fluidic connection of said inlet duct (5) with said outlet duct (6) of said valve, by disassembling the activating handle (16) and rotating the shutter (3).

15. Method according to claim 14, **characterized by** comprising the step of adjusting the minimum amount of fluid flow from said inlet duct (5) to said outlet duct (6) in said at least one bypass duct (8).

## Patentansprüche

1. Ein An/Aus Ventil (1) für einen Fluidfluss, von der Bauart enthaltend einen Ventilhauptkörper (2), der ausgestattet ist mit mindestens einem Einlasskanal (5) und mindestens einem Auslasskanal (6), mindestens einer durch einen Betätigungshebel (16) angetriebenen Verschlussklappe (3), die mit mindestens einem Durchgangskanal (7) versehen ist, und in einer Vertiefung (4) des Ventilkörpers (2) drehbar untergebracht ist, zu ihrer Drehung zwischen mindestens einer offenen Stellung des Ventils und mindestens einer geschlossenen Stellung des Ventils, wobei der Durchgangskanal (7), den Einlasskanal (5) mit dem Auslasskanal (6) in der offenen Stellung des Ventils in strömungstechnisch verbindet, wobei das Ventil weiterhin mindestens einen Bypasskanal (8) für die direkte oder indirekte stömungstechnische Verbindung des Einlasskanals (5) mit dem Auslasskanal (6) des Ventils umfasst, zumindest wenn die Verschlussklappe (3) sich in der mindestens einen geschlossener Stellung des Ventils befindet, **dadurch gekennzeichnet, dass** die Verschlussklappe (3) in eine vollstandig geschlossene Stellung des Ventils drehbar ist, wobei der Fluiddurchfluss von dem Einlasskanal (5) zu dem Auslasskanal (6) und durch den Bypasskanal (8) nicht ermöglicht wird und dass die Verschlussklappe (3) in die geschlossene Stellung des Ventils gebracht werden kann, in der der Durchfluss einer Mindestmenge des Fluidflusses von dem Einlasskanal (5) zu dem Auslasskanal (6) mittels des mindestens einen Bypasskanals (8) gewährleistet ist, indem der Betätigungshebel (16) zerlegt und die Verschlussklappe (3) gedreht wird.

2. Das Ventil gemäß Anspruch 1, wobei der mindestens eine Bypasskanal (8) mindestens teilweise in dem Ventilhauptkörper (2) eingearbeitet ist.

3. Das Ventil gemäß Anspruch 1 oder 2, wobei die mindestens eine Verschlussklappe (3) mindestens zwei Öffnungen (7a, 7b) aufweist, die den Durchgangskanal (7) definieren.

4. Das Ventil gemäß irgendeinem der vorherigen Ansprüche, **dadurch gekennzeichnet, dass** in der mindestens einen geschlossenen Stellung des Ventils die Verschlussklappe (3) den Fluiddurchfluss in den Ausgangskanal (6) verhindert und der Durchgangskanal (7) der Verschlussklappe (3) den Einlasskanal (5) mit der Vertiefung (4), in der die Verschlussklappe (3) untergebracht ist, strömungstechnisch verbindet.

5. Das Ventil gemäß Anspruch 4, wobei die Verschlussklappe (3) drei Öffnungen (7a, 7b, 7c) aufweist und wobei der Durchgangskanal (7) im Wesentlichen T-förmig ist.

6. Das Ventil gemäß Anspruch 4 oder 5, **dadurch gekennzeichnet, dass** der Bypasskanal (8) den Auslasskanal (6) mit der Vertiefung (4) strömungstechnisch verbindet, wobei die mindestens eine Vertiefung (4) in der geschlossenen Stellung des Ventils strömungstechnisch mit dem Einlasskanal (5) verbunden ist.

7. Das Ventil gemäß irgendeinem der vorherigen Ansprüche, **gekennzeichnet durch** das Vorhandensein von Mitteln (10) für das Absperren und/oder die Einstellung des Flusses innerhalb des Bypasskanals (8).

8. Das Ventil gemäß Anspruch 7, wobei die Mittel (10) für das Absperren und/oder die Einstellung des Flusses mindestens einen Gewindestift (11) aufweisen, der für das Blockieren mindestens eines Teils des Durchflussquerschnitts des Bypasskanals (8) angepasst ist.

9. Das Ventil gemäß Anspruch 8, wobei der mindestens eine Gewindestift (11) in mindestens einen Sitz (12) eingepasst ist, der von der Außenseite für die Einstellung der mindestens teilweisen Blockierung des Durchflussquerschnitts des Bypasskanals (8) zugänglich ist.

10. Das Ventil gemäß Anspruch 9, wobei der Zugang zu dem Sitz (12) durch einen Sicherheitsstecker (13) verhindert wird.

11. Das Ventil gemäß irgendeinem der vorherigen Ansprüche, **gekennzeichnet durch** das Vorhandensein von weiteren Mitteln (30) für das selektive Unterbrechen des Fluidflusses in dem Ventil, wobei die Mittel dem Fluid ermöglichen, in eine Richtung innerhalb des Ventils zu fließen und verhindern, dass es in die entgegengesetzte Richtung fließt.

12. Das Ventil gemäß Anspruch 11, wobei die Mittel (30) für das selektive Unterbrechen des Fluidflusses, die Fluidpassage von dem Einlasskanal (5) in Richtung des Auslasskanals (6) ermöglichen und den Rückstrom des Fluids von dem Auslasskanal (6) in Richtung des Einlasskanals (5) verhindern.

13. Das Ventil gemäß Anspruch 11 oder 12, wobei die Mittel (30) für das selektive Unterbrechen des Fluidflusses einen Kolben (31) umfassen, der sich aufgrund der Einwirkung des Fluids bewegt.

14. Ein Verfahren für die Gewährleistung des Durchganges einer Mindestmenge eines Fluidflusses mit Hilfe eines An/Aus-Ventils (1) gemäß irgendeinem der vorherigen Ansprüche, enthaltend einen Ventilhauptkörper (2), der ausgestattet ist mit mindestens einem Einlasskanal (5) und mindestens einem Auslasskanal (6), mindestens einer durch einen Betätigungshebel (16) angetriebenen Verschlussklappe (3), die mit mindestens einem Durchgangskanal (7) versehen ist, und in mindestens einer Vertiefung (4) des Ventilkörpers (2) drehbar untergebracht ist, zu ihrer Drehung zwischen mindestens einer offenen Stellung des Ventils und mindestens einer geschlossenen Stellung des Ventils, wobei die Verschlussklappe (3) in eine vollständig geschlossene Stellung des Ventils drehbar ist, wobei der Fluiddurchfluss von dem Einlasskanal (5) zu dem Auslasskanal (6) und durch den Bypasskanal (8) nicht ermöglicht wird,
wobei das Verfahren den Schritt des Verstellens der Verschlussklappe (3) von der mindestens einen offenen Stellung des Ventils beinhaltet, in der die Fluidpassage von dem Einlasskanal (5) zu dem Auslasskanal (6) ermöglicht wird und der Durchgangskanal (7) den Einlasskanal (5) mit dem Auslasskanal (6) strömungstechnisch verbindet, oder von der vollständig geschlossenen Stellung des Ventils, wobei die Fluidpassage von dem Einlasskanal (5) zu dem Auslasskanal (6) und durch den Bypasskanal (8) nicht ermöglicht wird, in die mindestens eine geschlossene Stellung des Ventils, in der der Durchfluss einer Mindestmenge des Fluidflusses von dem Einlasskanal (5) zu dem Auslasskanal (6) gewährleistet wird, mittels des mindestens einen Bypasskanals (8), der für die direkte oder indirekte strömungstechnische Verbindung des Einlasskanals (5) mit dem Auslasskanal (6) des Ventils angepasst ist, indem der Betätigungshebel (16) zerlegt und die Verschlussklappe (3) gedreht wird.

15. Das Verfahren gemäß Anspruch 14, **gekennzeichnet durch** den Schritt der Einstellung der Mindestmenge des Fluidflusses von dem Einlasskanal (5) zu dem Auslasskanal (6) in dem mindestens einen Bypasskanal (8).

## Revendications

1. Robinet de marche/arrêt (1) pour un écoulement de fluide, du type comprenant un corps de robinet principal (2) doté d'au moins un conduit d'admission (5) et d'au moins un conduit de refoulement (6), au moins un clapet (3) actionné par une poignée d'activation (16), doté d'au moins un conduit traversant (7) et logé avec faculté de rotation dans au moins un évidement (4) dudit corps de robinet (2) pour sa rotation entre au moins une position ouverte du robinet et au moins une position fermée du robinet, ledit conduit traversant (7) raccordant fluidiquement ledit conduit d'admission (5) audit conduit de refoulement (6) dans ladite position ouverte du robinet, ledit robinet comprenant en outre au moins un conduit de dérivation (8) pour le raccordement fluidique direct ou indirect dudit conduit d'admission (5) audit conduit de refoulement (6) dudit robinet au moins lorsque ledit clapet (3) est dans ladite au moins une position fermée du robinet, **caractérisé en ce que** ledit clapet (3) peut être mis en rotation dans une position complètement fermée du robinet, dans lequel le passage de fluide du conduit d'admission (5) au conduit de refoulement (6), et à travers le conduit de dérivation (8) n'est pas permis et **en ce que** ledit clapet (3) peut être amené dans ladite position fermée dudit robinet dans laquelle le passage d'une quantité minimale d'écoulement de fluide dudit conduit d'admission (5) audit conduit de refoulement (6) est garanti au moyen dudit au moins un conduit de dérivation (8) en démontant la poignée d'activation (16) et en mettant le clapet (3) en rotation.

2. Robinet selon la revendication 1, dans lequel ledit au moins un conduit de dérivation (8) est réalisé au moins partiellement dans ledit corps de robinet principal (2).

3. Robinet selon la revendication 1 ou 2, dans lequel ledit au moins un clapet (3) comprend au moins deux ouvertures (7a, 7b) définissant ledit conduit traversant (7).

4. Robinet selon l'une quelconque des revendications précédentes, **caractérisé en ce que** dans ladite au moins une position fermée dudit robinet, ledit clapet (3) empêche le passage de fluide dans ledit conduit de refoulement (6) et ledit conduit traversant (7) dudit clapet (3) raccorde fluidiquement ledit conduit d'admission (5) audit évidement (4) dans lequel le clapet (3) est logé.

5. Robinet selon la revendication 4, dans lequel ledit clapet (3) comprend trois ouvertures (7a, 7b, 7c), ledit conduit traversant (7) étant sensiblement en forme de T.

6. Robinet selon la revendication 4 ou 5, **caractérisé en ce que** ledit conduit de dérivation (8) raccorde fluidiquement ledit conduit de refoulement (6) audit évidement (4), ledit au moins un évidement (4) dans ladite position fermée dudit robinet étant fluidiquement raccordé audit conduit d'admission (5).

7. Robinet selon l'une quelconque des revendications précédentes, **caractérisé en ce qu'**il comprend des moyens (10) destinés à interrompre et/ou régler l'écoulement à l'intérieur dudit conduit de dérivation (8).

8. Robinet selon la revendication 7, dans lequel lesdits moyens (10) d'interruption et/ou réglage de l'écoulement comprennent au moins une vis sans tête (11) adaptée pour bloquer au moins en partie la section de passage dudit conduit de dérivation (8).

9. Robinet selon la revendication 8, dans lequel ladite au moins une vis sans tête (11) est ajustée dans au moins un siège (12) accessible depuis l'extérieur pour régler le au moins un blocage partiel de la section de passage dudit conduit de dérivation (8).

10. Robinet selon la revendication 9, dans lequel l'accès audit siège (12) est empêché par un bouchon de sûreté (13).

11. Robinet selon l'une quelconque des revendications précédentes, **caractérisé en ce qu'**il comprend des moyens (30) supplémentaires d'interception sélective de l'écoulement de fluide dans ledit robinet, lesdits moyens permettant audit fluide de passer dans une direction à l'intérieur dudit robinet et l'empêchant de passer dans la direction opposée.

12. Robinet selon la revendication 11, dans lequel lesdits moyens (30) d'interception sélective de l'écoulement de fluide permettent le passage de fluide du conduit d'admission (5) vers le conduit de refoulement (6), empêchant un retour de fluide du conduit de refoulement (6) vers le conduit d'admission (5).

13. Robinet selon la revendication 11 ou 12, dans lequel lesdits moyens (30) d'interception sélective de l'écoulement de fluide comprennent un piston (31) se déplaçant sous l'action du fluide.

14. Procédé permettant de garantir le passage d'une quantité minimale d'écoulement de fluide par un robinet de marche/arrêt (1), selon l'une quelconque des revendications précédentes, comprenant un corps de robinet principal (2) doté d'au moins un conduit d'admission (5) et d'au moins un conduit de refoulement (6), d'au moins un clapet (3) actionné par une poignée d'activation (16), doté d'au moins un conduit traversant (7) et logé avec faculté de rotation dans au moins un évidement (4) dudit corps de robinet (2) pour sa rotation entre au moins une position ouverte du robinet et au moins une position fermée du robinet, ledit clapet (3) pouvant être mis en rotation dans une position complètement fermée du robinet dans laquelle le passage de fluide du conduit d'admission (5) au conduit de refoulement (6), et à travers le conduit de dérivation (8), n'est pas permis, le procédé comprenant l'étape de déplacement dudit clapet (3) de ladite au moins une position ouverte dudit robinet dans laquelle le passage de fluide dudit conduit d'admission (5) audit conduit de refoulement (6) est permis et ledit conduit traversant (7) raccorde fluidiquement ledit conduit d'admission (5) audit conduit de refoulement (6), ou de ladite position complètement fermée du robinet dans laquelle le passage de fluide du conduit d'admission (5) au conduit de refoulement (6), et à travers le conduit de dérivation (8), n'est pas permis, à ladite au moins une position fermée dudit robinet dans laquelle le passage d'une quantité minimale d'écoulement de fluide dudit conduit d'admission (5) audit conduit de refoulement (6) est assuré au moyen dudit au moins un conduit de dérivation (8) adapté pour un raccordement fluidique direct, ou indirect, dudit conduit d'admission (5) audit conduit de refoulement (6) dudit robinet, en démontant la poignée d'activation (16) et mettant le clapet (3) en rotation.

15. Procédé selon la revendication 14, **caractérisé en ce qu'**il comprend l'étape de réglage de la quantité minimale d'écoulement de fluide dudit conduit d'admission (5) audit conduit de refoulement (6) dans ledit au moins un conduit de dérivation (8).
